# FASCICULE DE BREVET EUROPEEN

(11) **EP 3 650 264 B1**
(45) Date de publication et mention de la délivrance du brevet: **21.04.2021**
(21) Numéro de dépôt: 19206821.1
(22) Date de dépôt: 04.11.2019
(51) Int. Cl.: B60L 58/12, B60L 53/54, B66F 9/075, B66F 9/20, B66F 9/24, B60P 3/06, B60L 53/53

(54) **ENSEMBLE COMPRENANT UN VÉHICULE MOTEUR ROULANT PORTEUR ET UN VÉHICULE ROULANT EMBARQUABLE SUR LE VÉHICULE PORTEUR, A L'ARRIÈRE DU VÉHICULE PORTEUR**
ANORDNUNG, DIE EIN ROLLENDES TRÄGERFAHRZEUG UND EIN ROLLENDES FAHRZEUG UMFASST, DAS HINTEN AN BORD DES TRÄGERFAHRZEUGS PLATZIERT WERDEN KANN
ASSEMBLY COMPRISING A CARRIER ROLLING MOTOR VEHICLE AND A ROLLING VEHICLE THAT CAN BE PLACED ON BOARD THE CARRIER VEHICLE, AT THE REAR OF THE CARRIER VEHICLE

(30) Priorité: 07.11.2018 FR 1860234
(43) Date de publication de la demande: 13.05.2020
(73) Titulaire: MANITOU BF, 44150 Ancenis (FR)
(72) Inventeur: HERSANT, Pierre, 44150 Ancenis (FR)
(74) Mandataire: Ipsilon

(56) Documents cités:
- EP-A2- 2 246 958
- WO-A1-2018/076852
- DE-A1-102015 008 829
- DE-A1-102016 014 034
- FR-A1- 2 982 560

## Description

L'invention concerne un ensemble comprenant un véhicule moteur roulant porteur et un véhicule roulant embarquable sur le véhicule porteur, à l'arrière du véhicule porteur.

Elle concerne plus particulièrement un ensemble comprenant un véhicule moteur roulant porteur, un véhicule roulant électrique embarquable sur le véhicule porteur, un générateur de production d'électricité monté sur le véhicule porteur, le générateur de production d'électricité étant raccordable de manière désaccouplable par une liaison électrique au véhicule embarquable, le véhicule porteur étant équipé d'un organe de mise sous tension, tel qu'une clé de contact.

Les ensembles comprenant un véhicule porteur et un véhicule embarquable à l'arrière du véhicule porteur sont connus comme l'illustre le brevet EP 2 829 501. L'avantage d'un tel ensemble est de pouvoir disposer, à destination, d'un moyen de levage permettant de manutentionner et de charger ou décharger des charges importantes sans nécessité de main d'œuvre supplémentaire. Dans un tel ensemble, le véhicule embarquable présente de longues périodes de temps pendant lesquelles il est embarqué sur le véhicule porteur. Cela est problématique si le véhicule embarquable est un véhicule électrique. Il est en effet nécessaire, dans ce cas, de prévoir des périodes de déchargement du véhicule embarquable pendant lesquelles le véhicule embarquable est rechargé à poste fixe. Pour résoudre ce problème, une solution consiste à utiliser les batteries du véhicule porteur comme source d'alimentation en énergie comme l'illustre le brevet EP 2 653 339. Il est alors nécessaire de s'assurer que les périodes de fonctionnement du véhicule porteur sont suffisamment longues pour assurer une telle charge. Une telle prévision des périodes de fonctionnement n'est pas toujours possible de sorte qu'il existe un risque de pannes du véhicule porteur et/ou du véhicule embarquable.

Un but de l'invention est de proposer un ensemble dont la conception permet de s'affranchir d'un rechargement à poste fixe du véhicule électrique embarquable sans nuire à la fiabilité dudit ensemble.

A cet effet, l'invention a pour objet un ensemble comprenant un véhicule moteur roulant porteur, un véhicule électrique roulant embarquable sur le véhicule porteur, un générateur de production d'électricité monté sur le véhicule porteur, le générateur de production d'électricité étant raccordable de manière désaccouplable par une liaison électrique au véhicule embarquable, le véhicule porteur étant équipé d'un organe de mise sous tension, tel qu'une clé de contact, caractérisé en ce que le générateur de production d'électricité est un générateur dit autonome, indépendant en fonctionnement du véhicule porteur, ce générateur de production d'électricité étant configuré pour permettre la production d'électricité y compris à l'état arrêté du moteur du véhicule porteur et hors tension du véhicule porteur, en ce que ce générateur de production d'électricité comprend une unité de production d'électricité, un système de gestion de l'unité de production d'électricité, en ce que le véhicule embarquable comprend un accumulateur d'énergie apte à stocker l'énergie produite par l'unité de production d'électricité et un système de gestion de l'accumulateur d'énergie, les systèmes de gestion étant configurés pour échanger des informations, et en ce que le système de gestion de l'accumulateur d'énergie du véhicule embarquable est configuré pour empêcher l'entrainement en rotation des roues du véhicule embarquable à l'état raccordé du véhicule embarquable par la liaison électrique au générateur de production d'électricité du véhicule porteur.

L'utilisation d'un générateur de production d'électricité autonome, c'est-à-dire indépendant en fonctionnement du véhicule porteur, et apte à produire de l'électricité y compris à l'état arrêté du moteur du véhicule porteur et hors tension du véhicule porteur permet de garantir un rechargement du véhicule embarquable y compris après une longue période de non utilisation du véhicule porteur. Grâce au fait que le système de gestion de l'accumulateur d'énergie du véhicule embarquable est configuré pour empêcher l'entrainement en rotation des roues du véhicule embarquable à l'état raccordé du véhicule embarquable par la liaison électrique au générateur de production d'électricité du véhicule porteur, on évite ainsi tout endommagement de la liaison électrique.

Selon un mode de réalisation de l'invention, l'ensemble comprend un capteur de mesure du niveau de charge de l'accumulateur d'énergie et le système de gestion de l'accumulateur d'énergie du véhicule embarquable est configuré pour commander l'alimentation en énergie de l'accumulateur d'énergie au moins en fonction du niveau de charge mesuré.

Selon un mode de réalisation de l'invention, le véhicule porteur est équipé d'un accumulateur d'énergie tampon et le système de gestion de l'unité de production d'électricité du véhicule porteur est configuré pour commander l'alimentation en énergie de l'accumulateur d'énergie tampon à partir de l'unité de production d'électricité du générateur de production d'électricité en fonction des informations reçues du système de gestion de l'accumulateur d'énergie du véhicule embarquable. Il est ainsi possible de créer une réserve d'énergie tampon durant les périodes pendant lesquelles il n'est pas nécessaire de recharger le véhicule embarquable, celui-ci n'étant pas par exemple utilisé. Cette réserve tampon permet une recharge rapide du véhicule embarquable si nécessaire.

Selon un mode de réalisation de l'invention, le système de gestion de l'unité de production d'électricité du véhicule porteur est configuré pour commander l'alimentation en énergie de l'accumulateur d'énergie du véhicule embarquable à partir de l'accumulateur d'énergie tampon ou de l'unité de production d'électricité du générateur de production d'électricité en fonction des informations reçues du système de gestion de l'accumulateur d'énergie du véhicule embarquable. Il est ainsi possible de tenir compte du niveau de charge ou de la vitesse de charge souhaités pour choisir l'une ou l'autre des sources d'énergie.

Selon un mode de réalisation de l'invention, l'unité de production d'électricité est une pile à combustible ou un groupe électrogène comprenant un alternateur et un moteur thermique à combustion interne relié à un réservoir de carburant.

Selon un mode de réalisation de l'invention, le véhicule porteur comprend un réservoir de carburant et le réservoir de carburant du groupe électrogène et le réservoir du véhicule porteur sont au moins partiellement communs. En d'autres termes, le réservoir de carburant du véhicule porteur et le réservoir du groupe électrogène comprennent au moins une partie commune qui permet indifféremment l'alimentation en carburant du groupe électrogène ou du véhicule porteur. Il en résulte une autonomie accrue du véhicule embarquable.

Selon un mode de réalisation de l'invention, le réservoir de carburant du groupe électrogène est positionné dans la moitié avant du véhicule porteur et forme un lest. En effet, le réservoir de carburant du groupe électrogène peut être utilisé comme contrepoids du poids du véhicule embarquable à l'état embarqué du véhicule embarquable, ce véhicule embarquable étant positionné à l'arrière du véhicule porteur.

Selon un mode de réalisation de l'invention, le véhicule embarquable est équipé d'un organe de mise sous tension, tel qu'une clé de contact, et les systèmes de gestion sont configurés pour arrêter ou empêcher l'alimentation en énergie de l'accumulateur d'énergie du véhicule embarquable à l'état sous tension du véhicule embarquable.

Selon un mode de réalisation de l'invention, le véhicule embarquable comprend un connecteur électrique pour le raccordement de manière désaccouplable du véhicule embarquable à une source d'alimentation en électricité dite extérieure autre que le générateur de production d'électricité, et le système de gestion de l'accumulateur d'énergie du véhicule embarquable est configuré pour, à l'état raccordé du véhicule embarquable au générateur de production d'électricité et à la source d'alimentation en électricité extérieure, commander l'alimentation en énergie de l'accumulateur d'énergie à partir de la source d'alimentation en électricité extérieure. Cette alimentation de l'accumulateur d'énergie en priorité à partir d'une source d'énergie extérieure permet d'économiser la ressource formée par le générateur de production d'électricité.

Selon un mode de réalisation de l'invention, le véhicule embarquable à l'arrière du véhicule porteur est un véhicule de manutention de charges à fourches et le véhicule porteur comprend, à l'arrière du véhicule porteur, un support de réception des fourches.

Selon un mode de réalisation de l'invention, le support de réception des fourches est équipé d'au moins un actionneur électrique et le système de gestion de l'unité de production d'électricité du véhicule porteur est configuré pour commander l'alimentation électrique dudit au moins un actionneur électrique au moins à partir de l'unité de production d'électricité du générateur de production d'électricité.

L'invention sera bien comprise à la lecture de la description suivante d'exemples de réalisation, en référence aux dessins annexés dans lesquels :
La figure 1 représente une vue schématique d'un ensemble conforme à l'invention à l'état embarqué du véhicule embarquable, l'unité de production d'électricité étant un groupe électrogène ;

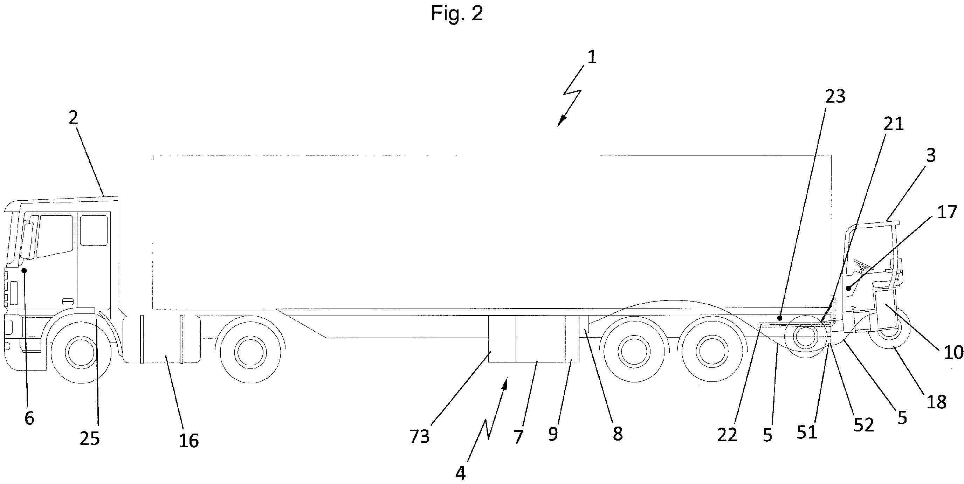

La figure 2 représente une vue schématique d'un ensemble conforme à l'invention à l'état embarqué du véhicule embarquable, l'unité de production d'électricité étant une pile à combustible ; et
La figure 3 représente sous forme de blocs, une vue schématique d'un ensemble conforme à l'invention.

Comme mentionné ci-dessus, l'ensemble 1, objet de l'invention, comprend un véhicule 2 moteur porteur et un véhicule 3 électrique roulant embarquable à l'arrière du véhicule 2 porteur. Le véhicule 2 porteur est un véhicule généralement équipé d'un moteur 25 thermique à combustion interne. Dans les exemples représentés, ce véhicule 2 porteur est un camion.

Le véhicule 2 porteur est classiquement équipé d'un organe 6 de mise sous tension du véhicule 2 porteur, tel qu'une clé de contact, pour permettre, lors du passage dudit organe 6 de mise sous tension d'une position à une autre, le passage du véhicule 2 porteur de l'état hors tension à l'état sous tension autorisant un démarrage du moteur 25 du véhicule 2 porteur. Ce véhicule 2 porteur est, en outre, généralement équipé d'un réservoir 16 de carburant alimentant en combustible le moteur 25 du véhicule porteur.

Le véhicule 3 électrique embarquable est un véhicule dit léger. Généralement, ce véhicule 3 embarquable à l'arrière du véhicule 2 porteur est un véhicule de manutention de charges à fourches 21, et le véhicule 2 porteur comprend à l'arrière du véhicule 2 porteur un support 22 de réception des fourches 21.

Les fourches 21 du véhicule 3 embarquable peuvent être disposées à l'extrémité d'un bras de levage télescopique ou non du véhicule 3 embarquable ou le long d'un mât dudit véhicule 3 embarquable. Dans ce cas, les fourches sont déplaçables à coulissement le long du mât. L'embarquement du véhicule 3 embarquable sur le véhicule 2 porteur et son débarquement du véhicule 2 porteur s'opèrent à l'aide des fourches 21 suivant une séquence en soi connue. En effet, pour permettre l'embarquement du véhicule 3 embarquable sur le véhicule 2 porteur, les fourches 21 sont levées et coopèrent avec les supports 22 du véhicule 2 porteur, ces supports 22 étant placés à l'arrière du véhicule 2 porteur et pouvant être formés par de simples glissières à l'intérieur desquelles les fourches 21 s'insèrent. Dans cette position, la commande d'abaissement des fourches 21 entraîne la levée du reste du véhicule 3 embarquable.

A l'état embarqué, le déchargement du véhicule 3 embarquable s'opère de manière inverse par abaissement de la partie du véhicule 3 embarquable autre que les fourches jusqu'à une position d'appui au sol des roues 18 du véhicule 3 embarquable puis sortie des fourches 21 de leur support 22.

Dans le cas d'un chargement automatique, un ou plusieurs actionneurs 23 électriques, tels que des vérins électriques, positionnés sur le véhicule 2 porteur peuvent aider au chargement ou au déchargement, notamment en déplaçant au moins une partie desdits supports 22.

Le véhicule 3 électrique embarquable est équipé d'une unité 13 d'entraînement, notamment des roues du véhicule et des fourches du véhicule, et d'un organe 17 de mise sous tension dudit véhicule, tel qu'une clé de contact. L'unité 13 d'entraînement en déplacement est bien connue à ceux versés dans cet art et comprend au moins un moteur électrique qui doit être alimenté en électricité. A cet effet, le véhicule 3 embarquable comprend un accumulateur 10 d'énergie électrique formé, par exemple, par un ensemble de batteries rechargeables, telles que des batteries au lithium ou au plomb.

Cet accumulateur 10 d'énergie permet, via un convertisseur 12 de tension, l'alimentation en énergie de l'unité 13 d'entraînement du véhicule 3 embarquable. Cet accumulateur 10 d'énergie comprend un capteur 14 de niveau de charge de l'accumulateur 10 dont le rôle sera décrit ci-après.

Le véhicule 3 embarquable comprend encore un système 11 de gestion de l'accumulateur 10 d'énergie. Le système 11 de gestion du véhicule 3 embarquable se présente sous la forme d'un système électronique et/ou informatique qui comprend, par exemple, un microprocesseur et une mémoire de travail. Selon un aspect particulier, le système de gestion peut se présenter sous la forme d'un automate programmable.

Autrement dit, les fonctions et étapes décrites peuvent être mise en œuvre sous forme de programme informatique ou via des composants matériels (par exemple, des réseaux de portes programmables). En particulier, les fonctions et étapes opérées par le système de gestion ou ses modules peuvent être réalisées par des jeux d'instructions ou modules informatiques implémentés dans un processeur ou contrôleur ou être réalisées par des composants électroniques dédiés ou des composants de type FPGA ou ASIC. Il est aussi possible de combiner des parties informatiques et des parties électroniques.

Lorsqu'il est précisé que le système de gestion ou des moyens ou des modules du système de gestion sont configurés pour réaliser une opération donnée, cela signifie que le système de gestion comprend des instructions informatiques et les moyens d'exécution correspondants qui permettent de réaliser ladite opération et/ou que le système de gestion comprend des composants électroniques correspondants.

Ce système 11 de gestion est apte à recevoir des informations de l'unité 13 d'entraînement du véhicule 3 embarquable ou de capteurs, tels que le capteur 14 de niveau de charge équipant l'accumulateur 10 d'énergie, à traiter ces informations et à gérer l'alimentation en énergie de l'accumulateur 10 d'énergie en fonction de ces informations.

De manière caractéristique à l'invention, le véhicule 2 porteur comprend un générateur 4 de production d'électricité dit autonome, c'est-à-dire indépendant en fonctionnement du véhicule 2 porteur et apte à permettre la production d'électricité y compris à l'état arrêt du moteur 25 du véhicule porteur et hors tension du véhicule 2 porteur. Ce générateur 4 de production d'électricité, dans les exemples représentés, est positionné au moins partiellement sous le châssis du véhicule 2 porteur.

De manière générale, ce générateur 4 de production d'électricité comprend une unité 7 de production d'électricité et un système 8 de gestion de l'unité 7 de production d'électricité, et l'accumulateur 10 d'énergie du véhicule 3 embarquable, décrit ci-dessus, est apte à stocker l'énergie produite par l'unité 7 de production d'électricité, les systèmes 8 et 11 de gestion étant configurés pour échanger des informations.

Pour permettre un tel transfert d'électricité, le véhicule 2 porteur et le véhicule 3 embarquable sont couplables l'un à l'autre par une liaison 5 électrique qui relie, ici, le générateur 4 de production d'électricité du véhicule 2 porteur à l'accumulateur 10 d'énergie du véhicule 3 embarquable. Cette liaison 5 électrique peut être une liaison filaire comme dans l'exemple représenté. Cette liaison 5 électrique comprend un connecteur 51, tel qu'une prise mâle ou respectivement femelle, porté par le véhicule 2 porteur et un connecteur 52, tel qu'une prise femelle ou respectivement mâle, porté par le véhicule 3 embarquable. Ces connecteurs 51, 52 sont configurés pour permettre à l'état couplé le transport d'énergie le long de ladite liaison 5 électrique. Ce raccordement entre les connecteurs 51, 52 peut s'opérer de manière manuelle, le conducteur des véhicules procédant à ce raccordement une fois le véhicule 3 embarquable embarqué. Ce raccordement peut également s'opérer de manière automatique, les connecteurs étant, dans ce cas, par exemple, respectivement intégrés, l'un, dans la fourche, l'autre, dans les supports 22 des fourches 21 pour permettre un raccordement automatique à l'état positionné des fourches 21 dans les supports 22. Dans le cas où le support 22 est équipé d'au moins un actionneur 23 électrique, comme mentionné ci-dessus, le système 8 de gestion de l'unité 7 de production d'électricité du véhicule 2 porteur est configuré pour commander l'alimentation électrique dudit au moins un actionneur 23 au moins à partir de l'unité 7 de production d'électricité du générateur 4 de production d'électricité.

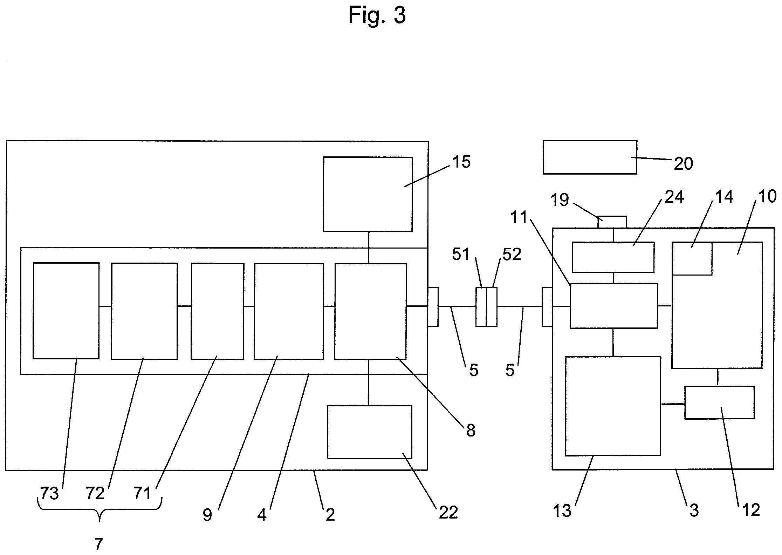

A l'état raccordé par la liaison 5 électrique, les systèmes 8 et 11 de gestion du véhicule 2 porteur et du véhicule 3 embarquable sont, en outre, configurés pour échanger, via ladite liaison 5, des informations en vue d'une optimisation de la gestion de l'unité 7 de production d'électrique et de l'accumulateur 10 d'énergie. Ainsi, par exemple, dans l'exemple représenté à la figure 3, le véhicule 2 porteur est équipé d'un accumulateur 15 d'énergie tampon et le système 8 de gestion de l'unité 7 de production d'électricité du véhicule 2 porteur est configuré pour commander l'alimentation en énergie de l'accumulateur 15 d'énergie tampon à partir de l'unité 7 de production d'électricité du générateur 4 de production d'électricité en fonction des informations reçues du système 11 de gestion de l'accumulateur 10 d'énergie du véhicule 3 embarquable.

Ainsi, si le système 11 de gestion de l'accumulateur 10 d'énergie du véhicule 3 embarquable adresse au système 8 de gestion de l'unité 7 de production d'électricité une requête de fourniture d'électricité résultant, par exemple, d'un niveau de charge de l'accumulateur 10 d'énergie inférieur à une valeur seuil prédéterminée, alors l'alimentation en énergie de l'accumulateur 15 d'énergie tampon à partir de l'unité 7 de production d'électricité est stoppée et l'énergie produite par l'unité 7 de production d'énergie du générateur 4 de production d'électricité est dirigée via la liaison 5 électrique vers l'accumulateur 10 d'énergie du véhicule 3 embarquable.

L'accumulateur 15 d'énergie tampon peut également être équipé d'un capteur de niveau de charge et le système 8 de gestion du véhicule 2 porteur peut être configuré dans ce cas pour commander l'alimentation en énergie de l'accumulateur 15 d'énergie tampon à partir de l'unité 7 de production d'électricité du générateur 4 de production d'énergie jusqu'à un niveau de charge prédéterminé au moins à l'état non raccordé du connecteur 52 du véhicule 3 embarquable au connecteur 51 du véhicule 2 porteur.

En outre, à l'état raccordé du véhicule 2 porteur et du véhicule 3 embarquable par la liaison 5 électrique, le système 8 de gestion de l'unité 7 de production d'électricité du véhicule 2 porteur peut être est configuré pour commander l'alimentation en énergie de l'accumulateur 10 d'énergie du véhicule 3 embarquable à partir de l'accumulateur 15 d'énergie tampon ou de l'unité 7 de production d'électricité du générateur 4 de production d'électricité en fonction des informations reçues du système 11 de gestion de l'accumulateur 10 d'énergie du véhicule 3 embarquable.

En effet, le système 11 de gestion de l'accumulateur 10 d'énergie du véhicule 3 embarquable est configuré pour déterminer, à partir des informations relatives au niveau de charge de l'accumulateur 10 d'énergie et des demandes en énergie de l'unité 13 d'entraînement du véhicule 3 embarquable, si la vitesse de charge doit être rapide ou lente. Dans le cas d'une charge rapide, l'accumulateur 15 d'énergie tampon sera utilisé. Dans le cas d'une charge lente, c'est l'unité 7 de production d'électricité qui est utilisée comme source de fourniture d'énergie électrique à l'accumulateur 10 d'énergie.

Les systèmes 8 et 11 de gestion sont, en outre, configurés pour arrêter ou empêcher l'alimentation en énergie de l'accumulateur 10 d'énergie du véhicule 3 embarquable à l'état sous tension du véhicule 3 embarquable. Ainsi, dès que le conducteur du véhicule 3 embarquable actionne la clé de contact dudit véhicule 3 embarquable dans le sens d'une mise sous tension, aucun transfert d'énergie ne peut plus s'opérer entre le véhicule 2 porteur et le véhicule 3 embarquable. De même, le système 11 de gestion de l'accumulateur d'énergie du véhicule 3 embarquable est configuré pour empêcher l'entrainement en rotation des roues 18 du véhicule 3 embarquable à l'état raccordé du véhicule 3 embarquable par la liaison 5 électrique au générateur 4 de production d'électricité du véhicule 2 porteur. Ceci contraint le conducteur des véhicules à procéder au raccordement de la liaison 5 électrique une fois le véhicule 3 embarquable positionné prêt à embarquer ou embarqué et à procéder au débranchement de la liaison 5 électrique avant le déchargement complet du véhicule 3 embarquable pour éviter tout endommagement de la liaison 5 électrique.

Pour parfaire l'ensemble, le véhicule 3 embarquable comprend un connecteur 19 électrique pour le raccordement de manière désaccouplable du véhicule 3 embarquable à une source 20 d'alimentation en électricité dite extérieure autre que le générateur 4 de production d'électricité. Cette source 20 d'alimentation en électricité extérieure peut être formée par le secteur.

Ce connecteur 19 électrique est, dans les exemples représentés, couplé au système 11 de gestion du véhicule 3 embarquable via un convertisseur 24 de tension.

Le système 11 de gestion de l'accumulateur 10 d'énergie du véhicule 3 embarquable est configuré pour, à l'état raccordé du véhicule 3 embarquable au générateur 4 de production d'électricité et à la source 20 d'alimentation en électricité extérieure, commander l'alimentation en énergie de l'accumulateur 10 d'énergie à partir de la source 20 d'alimentation en électricité extérieure. Ainsi, la source 20 d'alimentation en électricité extérieure est utilisée en priorité pour économiser le générateur 4 de production d'électricité.

L'unité 7 de production d'électricité est une pile à combustible ou un groupe électrogène comprenant un alternateur 71 et un moteur 72 à combustion thermique relié à un réservoir 73 de carburant.

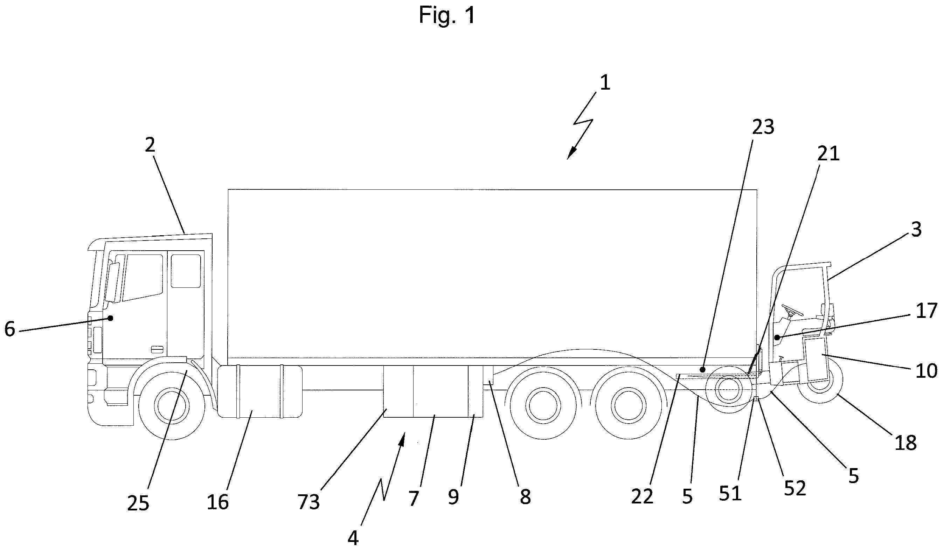

Dans l'exemple représenté à la figure 1 où l'unité 7 de production d'électricité est un groupe électrogène relié via un convertisseur 9 de tension au système 8 de gestion du véhicule 2 porteur, lui-même relié par la liaison 5 filaire au système 11 de gestion du véhicule 3 embarquable, le réservoir 73 de carburant du groupe électrogène est commun avec le réservoir 16 du véhicule 2 porteur, de sorte que l'autonomie du groupe électrogène peut être importante sans nécessiter la présence d'un réservoir encombrant dédié au groupe électrogène.

Dans l'exemple représenté à la figure 1, en outre, le réservoir 73 de carburant du groupe électrogène est positionné dans la moitié avant du véhicule 2 porteur et forme un lest constituant un contrepoids au poids du véhicule 3 embarquable à l'arrière du véhicule 2 porteur.

En pratique, le fonctionnement d'un tel ensemble est tel que suit :
On suppose que le véhicule 3 embarquable est prêt à être chargé à l'arrière du véhicule 2 porteur. Les fourches du véhicule 3 embarquable sont donc levées et positionnées dans les supports et le véhicule embarquable est élevé. En position embarquée du véhicule 3 embarquable, le conducteur des véhicules raccorde les raccords 51, 52 de la liaison 5 électrique entre eux et met hors tension le véhicule 3 embarquable pour permettre un rechargement de l'accumulateur 14 d'énergie dudit véhicule 3 embarquable si nécessaire. A chaque débarquement du véhicule 3 embarquable, le conducteur des véhicules commence par débrancher les connecteurs 51, 52 de liaison 5 filaire, l'un de l'autre, avant de procéder au débarquement en soi connu du véhicule 3 embarquable après une mise sous tension de ce dernier.

## Revendications

1. Ensemble (1) comprenant un véhicule (2) moteur roulant porteur, un véhicule (3) électrique roulant embarquable sur le véhicule (2) porteur, un générateur (4) de production d'électricité monté sur le véhicule (2) porteur, le générateur (4) de production d'électricité étant raccordable de manière désaccouplable par une liaison (5) électrique au véhicule (3) embarquable, le véhicule (2) porteur étant équipé d'un organe (6) de mise sous tension, tel qu'une clé de contact, **caractérisé en ce que** le générateur (4) de production d'électricité est un générateur dit autonome, indépendant en fonctionnement du véhicule (2) porteur, ce générateur (4) de production d'électricité étant configuré pour permettre la production d'électricité y compris à l'état arrêté du moteur (25) du véhicule (2) porteur et hors tension du véhicule (2) porteur, **en ce que** ce générateur (4) de production d'électricité comprend une unité (7) de production d'électricité, un système (8) de gestion de l'unité (7) de production d'électricité, **en ce que** le véhicule (3) embarquable comprend un accumulateur (10) d'énergie apte à stocker l'énergie produite par l'unité (7) de production d'électricité et un système (11) de gestion de l'accumulateur (10) d'énergie, les systèmes (8, 11) de gestion étant configurés pour échanger des informations, et **en ce que** le système (11) de gestion de l'accumulateur (10) d'énergie du véhicule (3) embarquable est configuré pour empêcher l'entrainement en rotation des roues (18) du véhicule (3) embarquable, à l'état raccordé du véhicule (3) embarquable par la liaison (5) électrique au générateur (4) de production d'électricité du véhicule (2) porteur.

2. Ensemble (1) selon la revendication 1, **caractérisé en ce qu'**il comprend un capteur (14) de mesure du niveau de charge de l'accumulateur (10) d'énergie et **en ce que** le système (11) de gestion de l'accumulateur (10) d'énergie du véhicule (3) embarquable est configuré pour commander l'alimentation en énergie de l'accumulateur (10) d'énergie au moins en fonction du niveau de charge mesuré.

3. Ensemble (1) selon l'une des revendications 1 ou 2, **caractérisé en ce que** le véhicule (2) porteur est équipé d'un accumulateur (15) d'énergie tampon et **en ce que** le système (8) de gestion de l'unité (7) de production d'électricité du véhicule (2) porteur est configuré pour commander l'alimentation en énergie de l'accumulateur (15) d'énergie tampon à partir de l'unité (7) de production d'électricité du générateur (4) de production d'électricité en fonction des informations reçues du système (11) de gestion de l'accumulateur (10) d'énergie du véhicule (3) embarquable.

4. Ensemble (1) selon la revendication 3, **caractérisé en ce que** le système (8) de gestion de l'unité (7) de production d'électricité du véhicule (2) porteur est configuré pour commander l'alimentation en énergie de l'accumulateur (10) d'énergie du véhicule (3) embarquable à partir de l'accumulateur (15) d'énergie tampon ou de l'unité (7) de production d'électricité du générateur (4) de production d'électricité en fonction des informations reçues du système (11) de gestion de l'accumulateur (10) d'énergie du véhicule (3) embarquable.

5. Ensemble (1) selon l'une des revendications 1 à 4, **caractérisé en ce que** l'unité (7) de production d'électricité est une pile à combustible ou un groupe électrogène comprenant un alternateur (71) et un moteur (72) thermique à combustion interne relié à un réservoir (73) de carburant.

6. Ensemble (1) selon la revendication 5, comprenant un groupe électrogène, **caractérisé en ce que** le véhicule (2) porteur comprend un réservoir (16) de carburant et **en ce que** le réservoir (73) de carburant du groupe électrogène et le réservoir (16) du véhicule (2) porteur sont au moins partiellement communs.

7. Ensemble (1) selon l'une des revendications 5 ou 6, **caractérisé en ce que** le réservoir (73) de carburant du groupe électrogène est positionné dans la moitié avant du véhicule (2) porteur et forme un lest.

8. Ensemble (1) selon l'une des revendications 1 à 7, **caractérisé en ce que** le véhicule (3) embarquable est équipé d'un organe (17) de mise sous tension, tel qu'une clé de contact, et **en ce que** les systèmes (8, 11) de gestion sont configurés pour arrêter ou empêcher l'alimentation en énergie de l'accumulateur (10) d'énergie du véhicule (3) embarquable à l'état sous tension du véhicule (3) embarquable.

9. Ensemble (1) selon l'une des revendications 1 à 8, **caractérisé en ce que** le véhicule (3) embarquable comprend un connecteur (19) électrique pour le raccordement de manière désaccouplable du véhicule (3) embarquable à une source (20) d'alimentation en électricité dite extérieure autre que le générateur (4) de production d'électricité, et **en ce que** le système (11) de gestion de l'accumulateur (10) d'énergie du véhicule (3) embarquable est configuré pour, à l'état raccordé du véhicule (3) embarquable au générateur (4) de production d'électricité et à la source (20) d'alimentation en électricité extérieure, commander l'alimentation en énergie de l'accumulateur (10) d'énergie à partir de la source (20) d'alimentation en électricité extérieure.

10. Ensemble (1) selon l'une des revendications 1 à 9, **caractérisé en ce que** le véhicule (3) embarquable à l'arrière du véhicule (2) porteur est un véhicule de manutention de charges à fourches (21) et **en ce que** le véhicule (2) porteur comprend, à l'arrière du véhicule (2) porteur, un support (22) de réception des fourches (21).

11. Ensemble (1) selon la revendication 10, **caractérisé en ce que** le support (22) de réception des fourches (21) est équipé d'au moins un actionneur (23) électrique et **en ce que** le système (8) de gestion de l'unité (7) de production d'électricité du véhicule (2) porteur est configuré pour commander l'alimentation électrique dudit au moins un actionneur (23) électrique au moins à partir de l'unité (7) de production d'électricité du générateur (4) de production d'électricité.

## Patentansprüche

1. Anordnung (1), umfassend ein rollendes Trägerkraftfahrzeug (2), ein auf das Trägerfahrzeug (2) aufbringbares rollendes Elektrofahrzeug (3), einen auf dem Trägerfahrzeug (2) angebrachten Stromerzeugungsgenerator (4), wobei der Stromerzeugungsgenerator (4) durch eine elektrische Verbindung (5) an das aufbringbare Fahrzeug (3) entkoppelbar gekoppelt ist, wobei das Trägerfahrzeug (2) mit einem Unterspannungssetzungsorgan (6) wie ein Kontaktschlüssel ausgestattet ist, **dadurch gekennzeichnet, dass** der Stromerzeugungsgenerator (4) ein so genannter autonomer Generator ist, der unabhängig vom Trägerfahrzeug (2) funktioniert, wobei dieser Stromerzeugungsgenerator (4) ausgelegt ist, um die Stromerzeugung inklusive im ausgeschalteten Zustand des Motors (25) des Trägerfahrzeugs (2) und stromlos vom Trägerfahrzeug (2) zu gestatten, dass dieser Stromerzeugungsgenerator (4) eine Stromerzeugungseinheit (7), ein Verwaltungssystem (8) der Stromerzeugungseinheit (7) umfasst, dass das aufbringbare Fahrzeug (3) einen Energiespeicher (10) umfasst, der imstande ist, die von der Stromerzeugungseinheit (7) erzeugte Energie zu speichern, und ein Verwaltungssystem (11) des Energiespeichers (10), wobei die Verwaltungssysteme (8, 11) ausgelegt sind, um Informationen auszutauschen, und dass das Verwaltungssystem (11) des Energiespeichers (10) des aufbringbaren Fahrzeugs (3) ausgelegt ist, um den Rotationsantrieb der Räder (18) des aufbringbaren Fahrzeugs (3) im durch die elektrische Verbindung (5) an den Stromerzeugungsgenerator (4) des Trägerfahrzeugs (2) angeschlossenen Zustand des aufbringbaren Fahrzeugs (3) zu verhindern

2. Anordnung (1) nach Anspruch 2, **dadurch gekennzeichnet, dass** sie einen Sensor (14) zum Messen des Ladeniveaus des Energiespeichers (10) umfasst und dass das Verwaltungssystem (11) des Energiespeichers (10) des aufbringbaren Fahrzeugs (3) ausgelegt ist, um die Energieversorgung des Energiespeichers (10) mindestens in Abhängigkeit vom gemessenen Ladeniveau zu steuern.

3. Anordnung (1) nach einem der Ansprüche 2 oder 3, **dadurch gekennzeichnet, dass** das Trägerfahrzeug (2) mit einem Pufferenergiespeicher (15) ausgestattet ist und dass das Verwaltungssystem (8) der Stromerzeugungseinheit (7) des Trägerfahrzeugs (2) ausgelegt ist, um die Energieversorgung des Pufferenergiespeichers (15) ab der Stromerzeugungseinheit (7) des Stromerzeugungsgenerators (4) in Abhängigkeit von den vom Verwaltungssystem (11) des Energiespeichers (10) des aufbringbaren Fahrzeugs (3) erhaltenen Informationen zu steuern.

4. Anordnung (1) nach Anspruch 4, **dadurch gekennzeichnet, dass** das Verwaltungssystem (8) der Stromerzeugungseinheit (7) des Trägerfahrzeugs (2) ausgelegt ist, um die Energieversorgung des Energiespeichers (10) des aufbringbaren Fahrzeugs (3) ab dem Pufferenergiespeicher (15) oder der Stromerzeugungseinheit (7) des Stromerzeugungsgenerators (4) in Abhängigkeit von den vom Verwaltungssystem (11) des Energiespeichers (10) des aufbringbaren Fahrzeugs (3) erhaltenen Informationen zu steuern.

5. Anordnung (1) nach einem der Ansprüche 2 bis 5, **dadurch gekennzeichnet, dass** die Stromerzeugungseinheit (7) eine Brennstoffzelle oder eine Stromerzeugungsgruppe ist, umfassend einen Wechselstromgenerator (71) und einen Verbrennungsmotor (72), der mit einem Kraftstoffvorratsbehälter (73) verbunden ist.

6. Anordnung (1) nach Anspruch 6, umfassend eine Stromerzeugungsgruppe, **dadurch gekennzeichnet, dass** das Trägerfahrzeug (2) einen Kraftstoffvorratsbehälter (16) umfasst und dass der Kraftstoffvorratsbehälter (73) der Stromerzeugungsgruppe und der Vorratsbehälter (16) des Trägerfahrzeugs (2) mindestens teilweise gemeinsam sind.

7. Anordnung (1) nach einem der Ansprüche 6 oder 7, **dadurch gekennzeichnet, dass** der Kraftstoffvorratsbehälter (73) der Stromerzeugungsgruppe in der vorderen Hälfte des Trägerfahrzeugs (2) positioniert ist und einen Ballast bildet.

8. Anordnung (1) nach einem der Ansprüche 2 bis 8, **dadurch gekennzeichnet, dass** das aufbringbare Fahrzeug (3) mit einem Organ (17) zum Unterspannungsetzen wie ein Kontaktschlüssel ausgestattet ist und dass die Verwaltungssysteme (8, 11) ausgelegt sind, um die Energieversorgung des Energiespeicher (10) des aufbringbaren Fahrzeugs (3) im Unterspannungszustand des aufbringbaren Fahrzeugs (3) zu stoppen oder zu verhindern.

9. Anordnung (1) nach einem der Ansprüche 2 bis 10, **dadurch gekennzeichnet, dass** das aufbringbare Fahrzeug (3) einen elektrischen Verbinder (19) für den entkoppelbaren Anschluss des aufbringbaren Fahrzeugs (3) an eine andere als der Stromerzeugungsgenerator (4) äußere Stromversorgungsquelle (20) umfasst und dass das Verwaltungssystem (11) des Energiespeichers (10) des aufbringbaren Fahrzeug (3) ausgelegt ist, um im angeschlossenen Zustand des aufbringbaren Fahrzeugs (3) an den Stromerzeugungsgenerator (4) und an die äußere Stromversorgungsquelle (20) die Energieversorgung des Energiespeichers (10) ab der äußeren Stromversorgungsquelle (20) zu steuern.

10. Anordnung (1) nach einem der Ansprüche 2 bis 10, **dadurch gekennzeichnet, dass** das hinten an Bord des Trägerfahrzeugs (2) aufbringbare Fahrzeug (3) ein Lastumschlagfahrzeug mit Gabeln (21) ist und dass das Trägerfahrzeug (2) hinten am Trägerfahrzeug (2) einen Halter (22) für die Aufnahme der Gabeln (21) umfasst.

11. Anordnung (1) nach Anspruch 12, **dadurch gekennzeichnet, dass** der Halter (22) für die Aufnahme der Gabeln (21) mit mindestens einem elektrischen Aktuator (23) ausgestattet ist und dass das Verwaltungssystem (8) der Stromerzeugungseinheit (7) des Trägerfahrzeugs (2) ausgelegt ist, um die elektrische Versorgung des mindestens einen elektrischen Aktuators (23) mindestens ab der Stromerzeugungseinheit (7) des Stromerzeugungsgenerators (4) zu steuern.

## Claims

1. An assembly (1) comprising a carrier rolling motor vehicle (2), a rolling electric vehicle (3) able to be loaded on the carrier vehicle (2), an electricity-producing generator (4) mounted on the carrier vehicle (2), the electricity-producing generator (4) being detachably connectable by an electrical connection (5) to the loadable vehicle (3), the carrier vehicle (2) being equipped with a power-up member (6), such as an ignition key, **characterized in that** the electricity-producing generator (4) is a so-called autonomous generator, operating independently of the carrier vehicle (2), this electricity-producing generator (4) being configured to allow the production of electricity including in the stopped condition of the engine (25) of the carrier vehicle (2) and when the carrier vehicle (2) is powered off, **in that** this electricity-producing generator (4) comprises an electricity-producing unit (7), a system (8) for managing the electricity-producing unit (7), **in that** the loadable vehicle (3) comprises an energy store (10) able to store the energy produced by the electricity-producing unit (7) and a system (11) for managing the energy store (10), the management systems (8, 11) being configured to exchange information and **in that** the management system (11) of the energy store (10) of the loadable vehicle (3) is configured to prevent the wheels (18) of the loadable vehicle (3) from being driven in rotation, in the condition of the loadable vehicle (3) connected by the electrical connection (5) to the electricity-producing generator (4) of the carrier vehicle (2).

2. The assembly (1) according to claim 2, **characterized in that** it comprises a sensor (14) for measuring the charge level of the energy store (10) and **in that** the system (11) for managing the energy store (10) of the loadable vehicle (3) is configured to control the energy supply of the energy store (10) at least as a function of the measured charge level.

3. The assembly (1) according to one of claims 2 or 3, **characterized in that** the carrier vehicle (2) is equipped with a buffer energy store (15) and **in that** the system (8) for managing the electricity-producing unit (7) of the carrier vehicle (2) is configured to control the energy supply of the buffer energy store (15) from the electricity-producing unit (7) of the electricity-producing generator (4) as a function of the information received from the management system (11) of the energy store (10) of the loadable vehicle (3).

4. The assembly (1) according to claim 4, **characterized in that** the system (8) for managing the electricity-producing unit (7) of the carrier vehicle (2) is configured to control the energy supply of the energy store (10) of the loadable vehicle (3) from the buffer energy store (15) or the electricity-producing unit (7) of the electricity-producing generator (4) as a function of information received from the management system (11) of the energy store (10) of the loadable vehicle (3).

5. The assembly (1) according to one of claims 2 to 5, **characterized in that** the electricity-producing unit (7) is a fuel-cell or a generator set comprising an alternator (71) and an internal combustion heat engine (72) connected to a fuel tank (73).

6. The assembly (1) according to claim 6, comprising a generator set, **characterized in that** the carrier vehicle (2) comprises a fuel tank (16) and **in that** the fuel tank (73) of the generator set and the tank (16) of the carrier vehicle (2) are at least partially shared.

7. The assembly (1) according to one of claims 6 or 7, **characterized in that** the fuel tank (73) of the generator set is positioned in the front half of the carrier vehicle (2) and forms a ballast.

8. The assembly (1) according to one of claims 2 to 8, **characterized in that** the loadable vehicle (3) is equipped with a power-up member (17), such as an ignition key, and **in that** the management systems (8, 11) are configured to stop or prevent the supply of energy of the energy store (10) of the loadable vehicle (3) in the powered up condition of the loadable vehicle (3).

9. The assembly (1) according to one of claims 2 to 10, **characterized in that** the loadable vehicle (3) comprises an electrical connector (19) for detachably connecting the loadable vehicle (3) to a so-called external electricity supply source (20) other than the electricity-producing generator (4), and **in that** the management system (11) of the energy store (10) of the loadable vehicle (3) is configured to, in the condition of the loadable vehicle (3) connected to the electricity-producing generator (4) and to the external electricity supply source (20), control the supply of energy to the energy store (10) from the external electricity supply source (20).

10. The assembly (1) according to one of claims 2 to 10, **characterized in that** the loadable vehicle (3) behind the carrier vehicle (2) is a forklift truck (21) and **in that** the carrier vehicle (2) comprises, behind the carrier vehicle (2), a support (22) for receiving forks (21).

11. The assembly (1) according to claim 12, **characterized in that** the support (22) for receiving forks (21) is equipped with at least one electric actuator (23) and **in that** the system (8) for managing the electricity-producing unit (7) of the carrier vehicle (2) is configured to control the electricity supply of said at least one electric actuator (23) at least from the electricity-producing unit (7) of the electricity-producing generator (4).
